(19) Europäisches Patentamt
European Patent Office
Office européen des brevets

(11) **EP 4 787 443 A1**

(12) # EUROPEAN PATENT APPLICATION
published in accordance with Art. 153(4) EPC

(43) Date of publication:
05.08.2026 Bulletin 2026/32

(21) Application number: 24871673.0

(22) Date of filing: 28.08.2024

(51) International Patent Classification (IPC):
H01M 4/13 (2010.01)    H01G 11/38 (2013.01)
H01G 11/40 (2013.01)    H01G 11/42 (2013.01)
H01G 11/44 (2013.01)    H01G 11/68 (2013.01)
H01M 4/36 (2006.01)     H01M 4/62 (2006.01)

(52) Cooperative Patent Classification (CPC):
H01G 11/38; H01G 11/40; H01G 11/42;
H01G 11/44; H01G 11/68; H01M 4/13; H01M 4/36;
H01M 4/62; Y02E 60/10

(86) International application number:
PCT/JP2024/030614

(87) International publication number:
WO 2025/069872 (03.04.2025 Gazette 2025/14)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 25.09.2023 JP 2023159351

(71) Applicant: **Panasonic Intellectual Property
Management Co., Ltd.
Kadoma-shi, Osaka 571-0057 (JP)**

(72) Inventor: **KATOU, Daisuke
Kadoma-shi, Osaka 571-0057 (JP)**

(74) Representative: **Eisenführ Speiser
Patentanwälte Rechtsanwälte PartGmbB
Postfach 10 60 78
28060 Bremen (DE)**

(54) **ELECTRODE AND NONAQUEOUS ELECTROLYTE SECONDARY BATTERY**

(57) The present invention provides a composite sheet having good moldability and stretchability. An electrode according to an exemplary embodiment of the present invention comprises a core material and a composite sheet bonded to a surface of the core material. The composite sheet contains a conductive material-coated active material, which is obtained by applying a conductive material on a surface of an active material, and a fibrous binder. The compression ratio of the conductive material-coated active material is 22% or less. The fibrous binder has a crystallite size of 30.5-35.6 nm, and contains polytetrafluoroethylene as a main component.

Figure 3

**Description**

TECHNICAL FIELD

The present disclosure relates to an electrode, particularly an electrode produced by a dry process, and to a non-aqueous electrolyte secondary battery comprising the electrode.

BACKGROUND ART

In general, electrodes of non-aqueous electrolyte secondary batteries, such as lithium-ion batteries, are produced by a wet process in which an electrode mixture slurry containing an active material, a binder, and the like is applied to the surface of a metal foil as a core material, followed by drying and compression of the coating film. In recent years, a dry process has been studied in which a mixture sheet is formed by stretching the electrode mixture into a sheet, and the sheet is then bonded to the core material to produce an electrode. Patent Literature 1 discloses an electrode mixture sheet produced by fibrillating PTFE by mixing an active material, a fibrillatable binder such as polytetrafluoroethylene (PTFE), and a conductive agent using a mill, followed by applying high pressure and large shear force to the mixture for a long period.

CITATION LIST

PATENT LITERATURE

PATENT LITERATURE 1: Japanese Translation of PCT International Application Publication No. 2019-512872

SUMMARY

In the dry process, if the fibrillation of the binder is insufficient or excessive, the mixture may fail to form a sheet due to its insufficient strength. Furthermore, even if the formability is good, poor stretchability of the mixture sheet may reduce productivity of the electrode and strength in the thickness direction of the electrode. The physical properties of the mixture sheet greatly vary depending on the state of the fibrillated fibrous binder. However, it has still not been specified whatever state the fibrous binder should be to realize a high-quality mixture sheet.

An object of the present disclosure is to provide a mixture sheet exhibiting favorable formability and stretchability.

The electrode according to the present disclosure comprises a core material; and a mixture sheet bonded to a surface of the core material, wherein the mixture sheet includes a conductive agent-coated active material in which a conductive agent is adhered to a surface of an active material, and a fibrous binder, a compression degree of the conductive agent-coated active material is less than or equal to 22%, and the fibrous binder has a crystallite size of greater than or equal to 30.5 nm and less than or equal to 35.6 nm and contains polytetrafluoroethylene as a main component.

The non-aqueous electrolyte secondary battery according to the present disclosure comprises the electrode. The configuration of the electrode is preferably applied to the positive electrode.

According to one aspect of the present disclosure, a mixture sheet having both formability and stretchability may be obtained.

BRIEF DESCRIPTION OF DRAWINGS

FIG. 1 is a sectional view of an electrode as an example of an embodiment.
FIG. 2 is a view illustrating a process of producing an electrode mixture material and a process of producing a mixture sheet from the electrode mixture in the production of an electrode as an example of an embodiment.
FIG. 3 is a view illustrating a process of bonding the mixture sheet to the surface of a core material in the production of an electrode as an example of an embodiment.

DESCRIPTION OF EMBODIMENTS

In electrodes produced by the dry process as described above, controlling the fibrous binder in an appropriate state is important for achieving a high-quality mixture sheet (mixture layer). The present inventors have investigated and revealed that when the active material, binder, and conductive agent are mixed simultaneously, a large portion of the conductive agent tends to be captured by the binder, which result in insufficient fibrillation of the binder. Although the detailed mechanism remains unclear, it is considered that the surface of the binder capturing the conductive agent becomes slippery, thereby making fibrillation less likely to occur due to insufficient shear stress. The present inventors have found that sufficient fibrillation can be achieved by mixing the binder with a conductive agent-coated active material in which the conductive agent is adhered to the surface of the active material, which is obtained by compounding the active material with the conductive agent in advance.

The present inventors have further investigated and found that, a mixture sheet exhibiting excellent formability and stretchability can be obtained by controlling the compression degree of the conductive agent-coated active material to less than or equal to 22%, using polytetrafluoroethylene as the main component of the binder, and adjusting the crystallite size of the binder within a range of greater than or equal to 30.5 nm and less than or equal to 35.6 nm. Such advantageous effects can be specifically achieved by adjusting the compression degree of the conductive agent-coated active material to less than or equal to 22% to maintain high fluidity thereof in the mixture sheet, and adjusting the crystallite size of the polytetrafluoroethylene within the specified range.

Hereinafter, embodiments of the electrode and the method for producing the electrode according to the present disclosure will be described in detail. The embodiments described below are merely examples, and the present disclosure is not limited to the embodiments. The drawings referred to in the description of the embodiments are schematically illustrated, and dimensional ratios of the components depicted in the drawings should be interpreted with reference to the following description. The present disclosure includes a configuration composed of a selective combination of a plurality of embodiments and modifications described below.

The electrode according to the present disclosure is suitable for a non-aqueous electrolyte secondary battery, such as a lithium-ion battery, but may also be applied to a battery containing an aqueous electrolyte or to a power storage device such as a capacitor. Hereinafter, the electrode for a non-aqueous electrolyte secondary battery will be described as an example. The configuration and production method of the electrode for a non-aqueous electrolyte secondary battery according to the present disclosure can be applied to the negative electrode, but are preferably applied to the positive electrode.

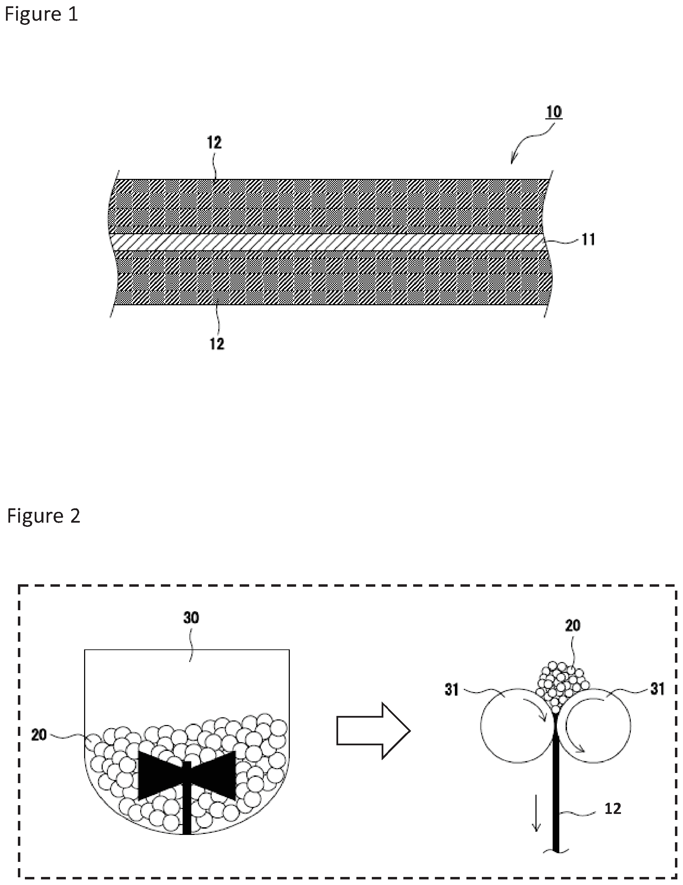

FIG. 1 is a sectional view of an electrode 10 as an example of an embodiment. As illustrated in FIG. 1, the electrode 10 comprises a core material 11 and a mixture sheet 12 bonded to the surface of the core material 11. The mixture sheet 12 is preferably bonded to both surfaces of the core material 11. The mixture sheet 12 is produced by forming an electrode mixture 20 (see FIG. 2) described later into a sheet, and is bonded to the core material 11 to form an electrode mixture layer. The electrode 10 may be an elongated electrode that forms a wound-type electrode assembly or a rectangular electrode that forms a laminated-type electrode assembly.

As the core material 11, a metal foil or a film with a metal layer formed on its surface can be used. The thickness of the core material is, for example, greater than or equal to 5 $\mu$m and less than or equal to 20 $\mu$m. When the electrode 10 is a positive electrode, for example, a metal foil such as aluminum or an aluminum alloy can be used as the core material 11. When the electrode 10 is a negative electrode, for example, a metal foil such as copper or a copper alloy can be used as the core material 11.

The mixture sheet 12 includes a conductive agent-coated active material in which a conductive agent is adhered to the surface of the active material, and a fibrous binder. The thickness of the mixture sheet 12 is, for example, greater than or equal to 50 $\mu$m and less than or equal to 150 $\mu$m, preferably greater than or equal to 80 $\mu$m and less than or equal to 140 $\mu$m, and more preferably greater than or equal to 100 $\mu$m and less than or equal to 130 $\mu$m.

The compression degree of the conductive agent-coated active material is less than or equal to 22%. As a result, the fluidity of the conductive agent-coated active material in the mixture sheet may be maintained to a predetermined level or higher. When the compression degree of the conductive agent-coated active material is more than 22%, formability and stretchability cannot be achieved simultaneously, even if the crystallite size of the polytetrafluoroethylene is within the predetermined range described later. The lower limit of the compression degree of the conductive agent-coated active material is not particularly limited, but may be, for example, 10%.

The compression degree of the conductive agent-coated active material is determined according to the formula below. Measurement of the compression degree may be performed by, for example, a powder tester PT-X available from Hosokawa Micron Corporation.

Compression degree (%) = (Tapped bulk density - Untapped bulk density)/Tapped bulk density $\times$ 100

The active material forming the conductive active-coated active material may be either a positive electrode active material or a negative electrode active material. Examples of the conductive agent forming the conductive active-coated active material include carbon materials such as carbon black (CB) including acetylene black (AB) and Ketjenblack, graphite, carbon nanotubes (CNTs), carbon nanofibers, and graphene. The content of the conductive agent in the mixture sheet 12 is, relative to 100 parts by mass of the active material, for example, greater than or equal to 0.1 mass% and less than or equal to 5 mass%, preferably greater than or equal to 0.2 mass% and less than or equal to 2 mass%, and more preferably greater than or equal to 0.3 mass% and less than or equal to 1 mass%.

As the positive electrode active material, a lithium transition metal composite oxide is generally used. Examples of metal elements contained in the lithium transition metal composite oxide include Ni, Co, Mn, Al, B, Mg, Ti, V, Cr, Fe, Cu, Zn, Ga, Sr, Zr, Nb, In, Sn, Ta, and W, among which at least one selected from Ni, Co, and Mn is preferably contained. The content of the positive electrode active material, relative to the mass of the mixture sheet 12, is preferably greater than or equal to 85 mass% and less than or equal to 99 mass%, and more preferably greater than or equal to 90 mass% and less than or equal to 99 mass% (the preferred content of the negative electrode active material is similar to the content of the positive electrode active material).

The positive electrode active material is a secondary particle formed by aggregation of a plurality of primary particles. The volume-based median diameter (D50) of the positive electrode active material is preferably greater than or equal to 3 $\mu$m and less than or equal to 30 $\mu$m. The D50 refers to the particle size at which the cumulative frequency in the volume-based particle size distribution reaches 50% from the smaller particle side, which is also referred to as the median diameter. The particle size distribution of the positive electrode active material can be measured using a laser diffraction particle size distribution measuring device (e.g., MT3000II, available from MicrotracBEL Corp.), with water used as the dispersion medium.

As the negative electrode active material, carbon-based active materials such as natural graphite, including flake graphite, lump graphite, and earthy graphite, and artificial graphite such as massive artificial graphite (MAG) and graphitized mesophase carbon microbeads (MCMB) may be used. An active material containing elements such as Si or Sn that alloy with lithium may also be used as the negative electrode active material.

The fibrous binder can be obtained, for example, by fibrillating a particulate binder under a predetermined shear force. The fibrous binder entangles active material particles and binds the active material particles to each other, thereby enabling the mixture sheet 12 to be formed into a single sheet. The fibrous binder is preferably a material that is capable of fibrillation, adheres to surfaces of the active material particles, and exhibits chemical resistance to an electrolyte.

The fibrous binder contains polytetrafluoroethylene (PTFE) as the main component. As used herein, the "main component" indicates the constituent present in the highest mass proportion, the ratio thereof relative to all constituents being, for example, greater than or equal to 90%. The fibrous binder may be composed substantially only of PTFE. In addition, provided that the purpose of the present disclosure is not impaired, the mixture sheet 12 may contain a non-fibrous binder such as polyvinylidene fluoride (PVDF).

The crystallite size of the fibrous binder is greater than or equal to 30.5 nm and less than or equal to 35.6 nm. The crystallite size is determined by X-ray diffraction measurement. Details of the X-ray diffraction measurement are described later (see Examples). By setting the crystallite size of the fibrous binder within the above range and controlling the compression degree of the conductive agent-coated active material to less than or equal to 22%, a mixture sheet in which formability and stretchability are both achieved can be obtained. When the crystallite size is less than 30.5 nm, for example, the fibers become excessively thin and the stretchability of the mixture sheet 12 decreases. When the crystallite size is more than 35.6 nm, the stretchability decreases significantly, and in some cases, not only the stretchability but also the formability decreases.

The fibrous binder (PTFE) preferably has a predetermined branched structure. A PTFE molecule having a branched structure is a molecule having one or more branch points in the molecule. On the other hand, a PTFE molecule having a linear structure means a molecule having no branch points in the molecule. The fibrous binder may be composed only of PTFE molecules having a branched structure, or may be a mixture of PTFE molecules having a branched structure and PTFE molecules having a linear structure. When the fibrous binder is such a mixture, each molecule need not satisfy the condition of the area ratio (Z) described later, as long as the mixture satisfies the condition of the area ratio (Z).

In a solid 19F-NMR measurement, the fibrous binder satisfies the condition that a ratio of an area of a second peak present between $\delta$ = -60 ppm and -200 ppm, excluding a first peak detected at $\delta$ = -122 ppm derived from F in a linear portion and a spinning sideband thereof, to an area of the first peak (hereinafter sometimes referred to as "area ratio (Z)") is greater than or equal to 0.01% and less than or equal to 10%. The lower limit of the area ratio (Z) is preferably 0.02%, and more preferably 0.05%. The upper limit of the area ratio (Z) is preferably 5%, more preferably 2%, and particularly preferably 1%.

The first peak, a peak derived from F in the linear portion ($-CF_2-CF_2-CF_2-$) of PTFE, is observed sharply at $\delta$ = -122 ppm. The second peak, mainly a peak derived from F in the branched portion of PTFE, partially includes a peak derived from F in the linear portion. The area ratio (Z) generally indicates the proportion of branched structures introduced into the molecules of the fibrous binder. Note that the peak derived from the F in the linear portion included in the second peak has substantially no influence on calculation of the proportion of branched structures.

The solid 19F-NMR spectrum of PTFE having a branched structure is disclosed, for example, in Japanese Unexamined Patent Application Publication No. 2008-069280 and in Japanese Journal of Polymer Science and Technology, Vol. 60, No. 4, pp. 145-157, 2003. The fibrous binder has a similar 19F-NMR spectrum. In a structural formula below, the peaks derived from F labeled b to d and g are detected only in the branched structure, while the peaks derived from F labeled a, e, and f are detected in both the linear structure and the branched structure. Note that the peak derived from F labeled a is the first peak detected at $\delta$ = -122 ppm.

[Formula 1]

By using a fibrous binder into which a branched structure satisfying the above conditions of the area ratio (Z) in solid 19F-NMR spectrum is introduced, the modification effect of the mixture sheet 12 becomes more remarkable. The PTFE forming the fibrous binder only needs to have a branched structure, but at least some of the molecules may be crosslinked. The introduction of a crosslinked structure facilitates, for example, the simultaneous attainment of favorable productivity and high strength of the mixture sheet 12.

The content of the fibrous binder is preferably greater than or equal to 0.1 parts by mass and less than or equal to 5 parts by mass, more preferably greater than or equal to 0.2 parts by mass and less than or equal to 2 parts by mass, and particularly preferably greater than or equal to 0.4 parts by mass and less than or equal to 1 part by mass, relative to 100 parts by mass of the active material. When the content of the fibrous binder is within the above range, the modification effect of the mixture sheet 12 becomes more remarkable.

When the mixture sheet 12 is divided into three equal parts in the thickness direction to form a first region, a second region, and a third region from the core material 11 side, the content (a) of the fibrous binder in the first region, the content (b) of the fibrous binder in the second region, and the content (c) of the fibrous binder in the third region preferably satisfy $(c - a)/(a + b + c) \leq \pm 10\%$, more preferably satisfy $(c - a)/(a + b + c) \leq \pm 5\%$. In the electrode 10, the fibrous binder is present substantially uniformly throughout the mixture sheet 12, without being localized in a part of the mixture sheet 12.

The density of the mixture sheet 12 is not particularly limited, but when the mixture sheet 12 forms a positive electrode mixture layer, the density is preferably greater than or equal to 2.5 g/cm$^3$ and less than or equal to 4.5 g/cm$^3$, more preferably greater than or equal to 3.0 g/cm$^3$ and less than or equal to 4.2 g/cm$^3$, and particularly preferably greater than or equal to 3.0 g/cm$^3$ and less than or equal to 4.0 g/cm$^3$. Note that the electrode 10 may be provided with an intermediate layer interposed between the core material 11 and the mixture sheet 12. The intermediate layer may include, for example, a conductive agent and a binder, thereby improving the bonding strength of the mixture sheet 12 to the core material 11 and reducing the interfacial resistance.

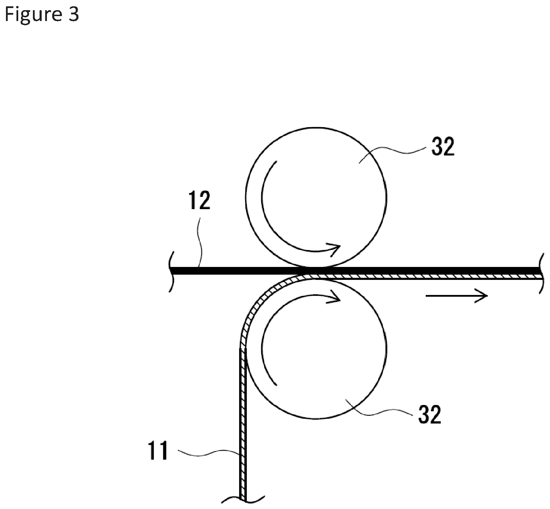

Hereinafter, an example of a method for producing the electrode 10 will be described with reference to FIGS. 2 and 3. The following description illustrates a method for producing a positive electrode, but this production method may also be similarly applied to the production of a negative electrode. FIG. 2 illustrates a process of producing an electrode mixture 20 and a process of producing the mixture sheet 12 from the electrode mixture 20, while FIG. 3 illustrates a process of bonding the mixture sheet 12 to the core material 11.

The electrode 10 is produced through the following steps:

(1) producing a conductive agent-coated active material by compounding an active material with a conductive agent;
(2) producing an electrode mixture including the conductive agent-coated active material and a fibrous binder, the electrode mixture having a solid content concentration of substantially 100% (see FIG. 2, left side);
(3) producing a mixture sheet 12 by forming the electrode mixture into a sheet (see FIG. 2, right side); and
(4) bonding the mixture sheet 12 to the surface of the core material 11 (see FIG. 3).

<Process of Producing Conductive Agent-Coated Active Material>

The conductive agent-coated active material can be obtained, for example, by compounding the active material with the conductive agent using existing equipment. Specifically, by charging the active material and the conductive agent into existing equipment such as a stirring granulator or a particle compounding apparatus, followed by stirring, the conductive agent is adhered to the surface of the active material to form a composite, thereby producing the conductive agent-coated active material. Examples of the equipment used for compounding include NOB300 Nobilta(R) and MECHANO FUSION(R) available from Hosokawa Micron Corporation, Hybridization System available from Nara Machinery Co., Ltd., FM Mixer and COMPOSI available from Nippon Coke & Engineering Co., Ltd., High-Speed Mixer available from EarthTechnica Co., Ltd., Intensive Mixer available from Nippon Eirich Co., Ltd., Balance Gran available from Freund-Turbo Corporation, and Vertical Granulator available from Powrex Corporation.

In the process of producing a conductive agent-coated active material, compounding is performed, and thus the compression degree of the conductive agent-coated active material is less than or equal to 22%. The present inventors have investigated in detail the relationship between the processing time for compounding (stirring time) the active material and the conductive agent and the compression degree of the conductive agent-coated active material, and have found that the compression degree decreases when the processing time is greater than or equal to 0 minutes (no compounding process) and less than or equal to a predetermined processing time, but increases when the processing time is greater than the predetermined processing time. In order to control the compression degree of the conductive agent-coated active material to less than or equal to 22%, the processing time for compounding is, for example, greater than or equal to 20 minutes and less than or equal to 40 minutes, although it depends on compounding conditions such as the rotation speed of the propeller during stirring. In the subsequent process of producing an electrode mixture, process of producing a mixture sheet, and bonding process, the compression degree of the conductive agent-coated active material remains substantially unchanged, and therefore, if the compression degree is made less than or equal to 22% in the process of producing a conductive agent-coated active material, the compression degree of the conductive agent-coated active material contained in the electrode 10 can be made less than or equal to 22%.

<Process of Producing Electrode Mixture>

The electrode mixture 20 illustrated in FIG. 2 is, for example, a powder obtained by stirring and mixing raw materials such as the conductive agent-coated active material and a particulate binder in a mixer 30. The electrode mixture 20 has a solid content concentration of substantially 100%. The particulate binder contained in the raw materials is fibrillated by stirring and mixing in the mixer 30 to become a fibrous binder. Fibrillation is carried out, and thus the crystallite size of the fibrous binder is greater than or equal to 30.5 nm and less than or equal to 35.6 nm. The content of the fibrous binder (i.e., the content of the particulate binder) is as described above.

In the process of producing an electrode mixture, the particulate binder used contains polytetrafluoroethylene (PTFE) as the main component. The particulate binder may contain components other than PTFE, such as polyvinylidene fluoride (PVdF), within a range that does not impair the purpose of the present disclosure, but may substantially contain only PTFE. The average particle size of the particulate binder is not particularly limited, but is preferably greater than or equal to 100 $\mu$m and less than or equal to 500 $\mu$m, and more preferably greater than or equal to 200 $\mu$m and less than or equal to 400 $\mu$m. The average particle size of the particulate binder can be determined by observing PTFE particles with a scanning electron microscope (SEM). Specifically, 100 particles are randomly selected, the diameter of the circumscribed circle of each of the 100 particles is measured, and the average of the measured values is calculated.

In the mixer 30, a conventionally known mechanical stirring mixer capable of applying mechanical shear force can be used. Specific examples of the mixer 30 include a cutter mill (such as a Wonder Crusher available from Osaka Chemical Co., Ltd.), a pin mill, a bead mill, a kneading machine (such as a kneader, a Banbury mixer), a planetary mixer, and a fine particle compounding apparatus (apparatus in which shear force is generated between a rotor having a special shape rotating at high speed inside a tank and a collision plate).

The mixing time by the mixer 30 (time during which shear force is applied to mixture raw materials) varies depending on the type of the mixer 30 and the like, but is preferably within several minutes, for example, greater than or equal to 0.5 minutes and less than or equal to 10 minutes. The rotation speed of the propeller of the mixer 30 is, for example, greater than or equal to 1000 rpm and less than or equal to 10000 rpm.

By stirring and mixing the raw materials with the mixer 30, an electrode mixture 20 is obtained which contains a conductive agent-coated active material having a compression degree less than or equal to 22%, and a fibrous binder containing, as the main component, polytetrafluoroethylene (PTFE) having a crystallite size of greater than or equal to 30.5 nm and less than or equal to 35.6 nm, and which has a solid content concentration of substantially 100%. The electrode mixture 20 obtained with the mixer 30 may be used for producing the mixture sheet 12, but the electrode mixture 20 obtained with the mixer 30 may also be supplied to a pair of rolls (not shown) to form a sheet and thereby promote fibrillation of PTFE. Specifically, the electrode mixture 20 is supplied to a gap formed between the pair of rolls, and is rolled by the pair of rolls to be formed into a sheet. By supplying the electrode mixture 20 to the pair of rolls and forming the electrode mixture 20 into a sheet, the particulate binder that has not been fibrillated in the electrode mixture can be fibrillated. The sheet of the electrode mixture thus obtained may be pulverized, for example, with a pulverizer, and returned to the electrode mixture 20. A conventionally known pulverizer can be used.

<Process of Producing Mixture Sheet>

In the process of producing a mixture sheet, the mixture sheet 12 is produced by a dry process using the electrode mixture 20 obtained in the process of producing an electrode mixture.

As illustrated in FIG. 2, in the process of producing a mixture sheet, the electrode mixture 20 is supplied to a pair of rolls 31, passed through a gap formed between the pair of rolls 31, and rolled to produce the mixture sheet 12. The rotation axes of the rolls illustrated in FIG. 2 are parallel, and the arrows drawn on the rolls indicate the rotation directions of the respective rolls. The pair of rolls 31, for example, have the same diameter. The mixture sheet 12 may be passed a plurality of times through the gap between the pair of rolls 31.

The thickness of the mixture sheet 12 can be controlled, for example, by the gap between the rolls, the peripheral speed of the rolls, and the number of times the sheet is passed through the rolls. In the process of producing a mixture sheet, the electrode mixture 20 may be formed into a sheet using rolls having a peripheral speed ratio differing by greater than or equal to 2 times. By making the peripheral speed ratio of the rolls different, thinning of the mixture sheet 12 is facilitated, and productivity is improved. In the process of producing a mixture sheet, the mixture sheet 12 may also be compressed at the end. The line pressure at that time is, for example, greater than or equal to 1 t/cm and less than or equal to 3 t/cm.

<Bonding Process>

For bonding the mixture sheet 12 and the core material 11, a pair of rolls 32 as illustrated in FIG. 3 is used, for example. By passing the mixture sheet 12 and the core material 11 between the pair of rolls 32, an electrode 10 is obtained in which the mixture sheet 12 is bonded to the surface of the core material 11. In FIG. 3, the mixture sheet 12 is bonded to only one surface of the core material 11, but the mixture sheet 12 may be bonded to both surfaces of the core material 11. In this case, two mixture sheets 12 may be bonded simultaneously to both surfaces of the core material 11, or after a first mixture sheet 12 is bonded to one surface of the core material 11, a second mixture sheet 12 may be bonded to the other surface of the core material 11.

At least one of the pair of rolls 32 may be heated. The temperature of these rolls is preferably from room temperature to less than or equal to 300°C, and more preferably from room temperature to less than or equal to 200°C. The line pressure between the pair of rolls 32 is, for example, greater than or equal to 0.1 t/cm and less than or equal to 2 t/cm. On both surfaces of the core material 11 used in this bonding process, an intermediate layer, such as an adhesive layer, may be formed.

The electrode 10 thus obtained may, if necessary, be subjected to a compression process. Specifically, the electrode 10 may be conveyed to a predetermined gap provided between a pair of opposing rolls and compressed by the gap. The line pressure between the pair of rolls for compressing the electrode 10 is, for example, greater than or equal to 1 t/cm and less than or equal to 3 t/cm.

EXAMPLES

Hereinafter, the present disclosure will be described in more detail with reference to Examples, but the present disclosure is not limited to these Examples.

<Example 1>

[Production of Positive Electrode Mixture Sheet]

Compounding process was carried out by mixing 100 parts by mass of a lithium transition metal composite oxide serving as a positive electrode active material and 0.8 parts by mass of acetylene black serving as a conductive agent for 20 minutes using NOB300-Nobilta(R) available from Hosokawa Micron Corporation to produce a conductive agent-coated positive electrode active material in which acetylene black is adhered to surfaces of the positive electrode active material particles. The compression degree of the conductive agent-coated positive electrode active material was 18.6%.

Next, the conductive agent-coated positive electrode active material and polytetrafluoroethylene (PTFE) were charged into a Wonder Crusher, available from Osaka Chemical Co., Ltd., at a mass ratio of 100:0.6 and subjected to mixing process at room temperature at a rotation speed of 8400 rpm for 2 minutes. As the PTFE, TE5448, available from Chemours-Mitsui Fluoroproducts Co., Ltd., was used. As a result of solid 19F-NMR measurement on TE5448, the ratio of the area of the second peak to the area of the first peak was 0.051%. The mixing process caused fibrillation of the PTFE particles into fibrous PTFE, thereby yielding a positive electrode mixture in which the carbon-coated positive electrode active material and the fibrous PTFE were uniformly dispersed. The resulting positive electrode mixture had a solid content concentration of 100%.

The positive electrode mixture was passed between a pair of rolls and rolled to produce a positive electrode mixture sheet. At that time, the peripheral speed ratio of the pair of rolls was adjusted to 1:1, and the line pressure between the pair of rolls was set to 0.1 t/cm. Using the positive electrode mixture sheet obtained by the first roll-pressing as described above, the formability was evaluated as follows. The evaluation result of formability was rated as acceptable.

[Evaluation of Formability]

The positive electrode mixture sheet was visually observed and evaluated according to the following criteria.

Acceptable: A single sheet can be formed, which can constitute a positive electrode mixture layer.

Unacceptable: Sheet formation is not possible, or even if formed, the sheet does not keep its form as a single sheet and fractures into small fragments.

Furthermore, the positive electrode mixture sheet obtained after the first roll-pressing was stretched by a pair of rolls to produce a stretched positive electrode mixture sheet. At that time, the peripheral speed ratio of the pair of rolls was set to 1:2, the line pressure between the pair of rolls 31 was set to 0.5 t/cm, and the gap between the pair of rolls was set to one-half of the thickness of the positive electrode mixture sheet before stretching. The stretchability while stretching the positive electrode mixture sheet obtained after the first roll-pressing as described above was evaluated as follows. The evaluation result of stretchability was rated as acceptable. In addition, a positive electrode mixture sheet whose evaluation result of formability was rated as unacceptable could not maintain its shape, and therefore, the evaluation of stretchability could not be performed. Thus, the evaluation result of stretchability was rated as unacceptable.

[Evaluation of Stretchability]

The positive electrode mixture sheet obtained after the first roll-pressing was visually observed during stretching as described above, and the stretchability was evaluated according to the following criteria:

Acceptable: The sheet does not break while the positive electrode mixture powder is being formed into a sheet.
Unacceptable: The sheet breaks while the positive electrode mixture powder is being formed into a sheet.

Finally, the stretched positive electrode mixture sheet was repeatedly stretched by passing it between two rolls at room temperature until a desired film thickness was obtained, thereby yielding a positive electrode mixture sheet to be used for the positive electrode.

[Production of Positive Electrode (Bonding Process)]

The positive electrode mixture sheet was placed on a core material composed of aluminum foil, and by pressing a laminate of the positive electrode mixture sheet and the core material using two rolls at room temperature (line pressure: 1 t/cm), a positive electrode was obtained in which positive electrode mixture sheets were bonded to both surfaces of the core material. The density of the positive electrode active material in the positive electrode mixture sheet was adjusted to 3.6 g/cm$^3$. Note that when the positive mixture sheet (positive mixture layer) was divided into three equal parts in the thickness direction to form a first region, a second region, and a third region from the core material side, the content (a) of the fibrous PTFE in the first region, the content (b) of the fibrous PTFE in the second region, and the content (c) of the fibrous PTFE in the third region satisfied (c - a) $\times$ 100/(a + b + c) = 1%.

After extracting a sample (PTFE) from the positive electrode by the following method, X-ray diffraction measurement was carried out to evaluate the crystallite size of fibrous PTFE. For the positive electrode, the crystallite size of the fibrous PTFE was evaluated by the method described below, and the crystallite size was 31.4 nm.

[Measurement of Crystallite Size]

(Acid Dissolution)

A positive electrode mixture sheet peeled from the positive electrode was placed in a glass beaker, and 30 mL of aqua regia (36% hydrochloric acid:70% nitric acid = 3:1 (volume ratio)) was added thereinto and the resultant was heated to dissolve the positive electrode mixture sheet. After the solution was cooled to room temperature and diluted with pure water, suction filtration was carried out using a membrane filter (pore size: 0.1 $\mu$m). The residue on the filter was washed with pure water and then dried by heating in a drying oven at 50°C for 6 hours to yield a sample (PTFE).

(X-ray Diffraction Measurement)

Apparatus: SmartLab (available from Rigaku Corporation)
Stage: Standard stage
Sample holder: Glass sample plate
Incident X-ray: Cu-K $\alpha$
Output: 40 kV, 30 mA
Optical system: CBO-$\alpha$ optics (focusing method)
Scan axis: 2$\theta$/ $\theta$
Scan speed: 1°/min (for narrow scan)
Step: 0.01°
Scan range: greater than or equal to 15° and less than or equal to 21° (PTFE peak region)
Detector: SC detector
Slit condition: 1/4° (DS), 1/4° (SS), 0.3 mm (RS)

From the half-width of the peak obtained in the above measurement, the crystallite size of PTFE was calculated using the Scherrer equation.

<Example 2>

A positive electrode was produced and evaluated in the same manner as in Example 1, except that the processing time for compounding was changed to 30 minutes in the production of the positive electrode mixture sheet. The compression degree of the conductive agent-coated positive electrode active material was 16.5%, and the PTFE had a crystallite size of 32.1 nm. The evaluation results of formability and stretchability were both rated as acceptable.

<Example 3>

The positive electrode was produced and evaluated in the same manner as in Example 1, except that the processing time for compounding was changed to 30 minutes, the apparatus for performing mixing process was changed from Wonder Crusher to an intensive mixer available from Nippon Eirich Co., Ltd., and that the mixing process condition was changed to a rotation speed of 6300 rpm for 3 minutes in the production of the positive electrode mixture sheet. The PTFE had a crystallite size of 31.8 nm. The evaluation results of formability and stretchability were both rated as acceptable.

<Example 4>

A positive electrode was produced and evaluated in the same manner as in Example 1, except that the processing time for compounding was changed to 40 minutes in the production of the positive electrode mixture sheet. The compression degree of the conductive agent-coated positive electrode active material was 20.7%, and the PTFE had a crystallite size of 32.4 nm. The evaluation results of formability and stretchability were both rated as acceptable.

<Comparative Example 1>

The positive electrode was produced and evaluated in the same manner as in Example 1, except that the compounding process was omitted, and that lithium transition metal composite oxide, acetylene black, and PTFE were subjected to mixing process in the production of the positive electrode mixture sheet. The compression degree of the lithium transition metal composite oxide with no conductive agent coated was 33.7%, and the PTFE had a crystallite size of 37.5 nm. The evaluation results of formability and stretchability were both rated as unacceptable.

<Comparative Example 2>

A positive electrode was produced and evaluated in the same manner as in Example 1, except that the processing time for compounding was changed to 10 minutes in the production of the positive electrode mixture sheet. The compression degree of the conductive agent-coated positive electrode active material was 23.6%, and the PTFE had a crystallite size of 35.9 nm. The evaluation results of formability and stretchability were both rated as unacceptable.

<Comparative Example 3>

The positive electrode was produced and evaluated in the same manner as in Example 1, except that the processing time for compounding was changed to 30 minutes, the apparatus for performing mixing process was changed from Wonder Crusher to an intensive mixer available from Nippon Eirich Co., Ltd., and that the mixing process condition was changed to a rotation speed of 6300 rpm for 4 minutes in the production of the positive electrode mixture sheet. The PTFE had a crystallite size of 30.4 nm. The evaluation result of formability was rated as acceptable, while the evaluation result of stretchability was rated as unacceptable.

<Comparative Example 4>

A positive electrode was produced and evaluated in the same manner as in Example 1, except that the processing time for compounding was changed to 50 minutes in the production of the positive electrode mixture sheet. The compression degree of the conductive agent-coated positive electrode active material was 23.1%, and the PTFE had a crystallite size of 35.7 nm. The evaluation result of formability was rated as acceptable, while the evaluation result of stretchability was rated as unacceptable.

<Comparative Example 5>

A positive electrode was produced and evaluated in the same manner as in Example 1, except that the processing time for compounding was changed to 60 minutes in the production of the positive electrode mixture sheet. The compression degree of the conductive agent-coated positive electrode active material was 25.9%, and the PTFE had a crystallite size of 36.6 nm. The evaluation result of formability was rated as acceptable, while the evaluation result of stretchability was rated as unacceptable.

[Table 1]

| | Conductive agent-coated active material | | Mixing process | | PTFE crystallite size [nm] | Evaluation result | |
|---|---|---|---|---|---|---|---|
| | Processing time for compounding [min] | Compression degree [%] | Apparatus | Condition | | Formability | Stretchability |
| Example 1 | 20 | 18.6 | Wonder Crusher | 8400rpm 2min | 31.4 | Acceptable | Acceptable |
| Example 2 | 30 | 16.5 | Wonder Crusher | 8400rpm 2min | 32.1 | Acceptable | Acceptable |
| Example 3 | 30 | 16.5 | Intensive mixer | 6300rpm 3min | 31.8 | Acceptable | Acceptable |
| Example 4 | 40 | 20.7 | Wonder Crusher | 8400rpm 2min | 32.4 | Acceptable | Acceptable |
| Comparative Example 1 | 0 | 33.7 | Wonder Crusher | 8400rpm 2min | 37.5 | Unacceptable | Unacceptable |
| Comparative Example 2 | 10 | 23.6 | Wonder Crusher | 8400rpm 2min | 35.9 | Unacceptable | Unacceptable |
| Comparative Example 3 | 30 | 16.5 | Intensive mixer | 6300rpm 4min | 30.4 | Acceptable | Unacceptable |
| Comparative Example 4 | 50 | 23.1 | Wonder Crusher | 8400rpm 2min | 35.7 | Acceptable | Unacceptable |
| Comparative Example 5 | 60 | 25.9 | Wonder Crusher | 8400rpm 2min | 36.6 | Acceptable | Unacceptable |

As shown in Table 1, in Examples, positive electrode mixture sheets having both good formability and good stretchability were obtained. On the other hand, the positive electrode mixture sheets obtained in Comparative Examples had poor formability so that stretchability could not be evaluated, or, even when the formability was evaluated as "acceptable", the stretchability was insufficient. Accordingly, it was found that a mixture sheet having good formability and stretchability can be provided by including a conductive agent-coated active material having a compression degree of less than or equal to 22% as well as a fibrous binder having a crystallite size of greater than or equal to 30.5 nm and less than or equal to 35.6 nm.

The present disclosure will be further described with reference to embodiments below.

Constitution 1:

An electrode comprising:

a core material; and
a mixture sheet bonded to a surface of the core material, wherein
the mixture sheet includes a conductive agent-coated active material in which a conductive agent is adhered to a surface of an active material, and a fibrous binder,
a compression degree of the conductive agent-coated active material is less than or equal to 22%, and
the fibrous binder has a crystallite size of greater than or equal to 30.5 nm and less than or equal to 35.6 nm and contains polytetrafluoroethylene as a main component.

Constitution 2:

The electrode according to Constitution 1, wherein, in a solid 19F-NMR measurement of the fibrous binder, a ratio of an area of a second peak present between $\delta$ = -60 ppm and -200 ppm, excluding a first peak detected at $\delta$ = -122 ppm derived from F in a linear portion and a spinning sideband thereof, to an area of the first peak is greater than or equal to 0.01% and less than or equal to 10%.

Constitution 3:

The electrode according to Constitutions 1 or 2, wherein a content of the fibrous binder is greater than or equal to 0.1 parts by mass and less than or equal to 5 parts by mass relative to 100 parts by mass of the active material.

Constitution 4:

The electrode according to any one of Constitutions 1 to 3, wherein the electrode is a positive electrode.

Constitution 5:

A non-aqueous electrolyte secondary battery, comprising the electrode according to any one of Constitutions 1 to 4.

REFERENCE SIGNS LIST

10 Electrode, 11 Core material, 12 Mixture sheet, 20 Electrode mixture, 30 Mixer, 31, 32 Roll

**Claims**

1. An electrode comprising:

   a core material; and
   a mixture sheet bonded to a surface of the core material, wherein
   the mixture sheet includes a conductive agent-coated active material in which a conductive agent is adhered to a surface of an active material, and a fibrous binder,
   a compression degree of the conductive agent-coated active material is less than or equal to 22%, and
   the fibrous binder has a crystallite size of greater than or equal to 30.5 nm and less than or equal to 35.6 nm and contains polytetrafluoroethylene as a main component.

2. The electrode according to claim 1, wherein, in a solid 19F-NMR measurement of the fibrous binder, a ratio of an area of a second peak present between $\delta$ = -60 ppm and -200 ppm, excluding a first peak detected at $\delta$ = -122 ppm derived from F in a linear portion and a spinning sideband thereof, to an area of the first peak is greater than or equal to 0.01 % and less than or equal to 10%.

3. The electrode according to claim 1, wherein a content of the fibrous binder is greater than or equal to 0.1 parts by mass and less than or equal to 5 parts by mass relative to 100 parts by mass of the active material.

4. The electrode according to claim 1, wherein the electrode is a positive electrode.

5. A non-aqueous electrolyte secondary battery, comprising the electrode according to any one of claims 1 to 4.

Figure 1

Figure 2

Figure 3

## INTERNATIONAL SEARCH REPORT

| International application No. |
|---|
| **PCT/JP2024/030614** |

**A. CLASSIFICATION OF SUBJECT MATTER**

*H01M 4/13*(2010.01)i; *H01G 11/38*(2013.01)i; *H01G 11/40*(2013.01)i; *H01G 11/42*(2013.01)i; *H01G 11/44*(2013.01)i; *H01G 11/68*(2013.01)i; *H01M 4/36*(2006.01)i; *H01M 4/62*(2006.01)i

FI: H01M4/13; H01G11/38; H01G11/40; H01G11/42; H01G11/44; H01G11/68; H01M4/36 C; H01M4/62 Z

According to International Patent Classification (IPC) or to both national classification and IPC

**B. FIELDS SEARCHED**

Minimum documentation searched (classification system followed by classification symbols)

H01M4/13; H01G11/38; H01G11/40; H01G11/42; H01G11/44; H01G11/68; H01M4/36; H01M4/62

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2023/119814 A1 (PANASONIC INTELLECTUAL PROPERTY MANAGEMENT CO., LTD.) 29 June 2023 (2023-06-29) | 1-5 |
| A | US 2020/0321599 A1 (LG CHEMICAL LTD.) 08 October 2020 (2020-10-08) | 1-5 |
| A | WO 2023/043245 A1 (LG ENERGY SOLUTION, LTD.) 23 March 2023 (2023-03-23) | 1-5 |
| A | JP 2017-188451 A (SANYO CHEMICAL INDUSTRIES, LTD.) 12 October 2017 (2017-10-12) | 1-5 |
| A | JP 2017-188454 A (SANYO CHEMICAL INDUSTRIES, LTD.) 12 October 2017 (2017-10-12) | 1-5 |
| P, A | WO 2023/182030 A1 (PANASONIC INTELLECTUAL PROPERTY MANAGEMENT CO., LTD.) 28 September 2023 (2023-09-28) | 2 |

☐ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 November 2024** | **19 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/030614**

| Patent document cited in search report | | | Publication date (day/month/year) | Patent family member(s) | | | Publication date (day/month/year) |
|---|---|---|---|---|---|---|---|
| WO | 2023/119814 | A1 | 29 June 2023 | CN | 118318318 | A | |
| US | 2020/0321599 | A1 | 08 October 2020 | WO | 2019/059724 | A2 | |
| | | | | CN | 110476282 | A | |
| | | | | EP | 3595052 | A2 | |
| | | | | KR | 10-2019-0035579 | A | |
| WO | 2023/043245 | A1 | 23 March 2023 | JP | 2023-547114 | A | |
| | | | | US | 2023/0402609 | A1 | |
| | | | | CN | 116547826 | A | |
| | | | | KR | 10-2023-0040922 | A | |
| | | | | KR | 10-2024-0099124 | A | |
| | | | | EP | 4213243 | A1 | |
| JP | 2017-188451 | A | 12 October 2017 | (Family: none) | | | |
| JP | 2017-188454 | A | 12 October 2017 | (Family: none) | | | |
| WO | 2023/182030 | A1 | 28 September 2023 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019512872 W

- JP 2008069280 A

**Non-patent literature cited in the description**

- *Japanese Journal of Polymer Science and Technology*, 2003, vol. 60 (4), 145-157